# FASCICULE DE BREVET EUROPEEN

(11) **EP 1 581 414 B1**
(45) Date de publication et mention de la délivrance du brevet: **08.07.2020**
(21) Numéro de dépôt: 03813622.2
(22) Date de dépôt: 17.12.2003
(51) Int. Cl.: B60R 25/04

(54) **SYSTEME ET PROCEDE ANTI-VOL POUR VEHICULE, ET APPLICATION DE CE SYSTEME POUR LA GESTION D'UNE FLOTTE DE VEHICULES**
ANTIDIEBSTAHLVORRICHTUNG UND -VERFAHREN UND ANWENDUNG DESSEN FÜR DIE VERWALTUNG EINES FAHRZEUGPARKS
VEHICLE ANTI-THEFT SYSTEM AND METHOD, AND USE THEREOF FOR MANAGING A FLEET OF VEHICLES

(30) Priorité: 18.12.2002 FR 0216053
(43) Date de publication de la demande: 05.10.2005
(73) Titulaire: Eileo, 94270 Le Kremlin Bicetre (FR)
(72) Inventeur: LEMOULT, Thierry, F- 77500 Chelles (FR)
(74) Mandataire: IPAZ
(86) Numéro de dépôt international: PCT/FR2003/003757
(87) Numéro de publication internationale: WO 2004/056621

(56) Documents cités:
- EP-A- 1 128 335
- WO-A-93/05987
- US-A- 5 939 975
- US-A1- 2002 008 645

## Description

La présente invention se rapporte à un système et un procédé anti-démarrage pour véhicule. Elle trouve une application particulièrement intéressante, mais non exclusivement, dans la gestion d'une flotte de véhicules.

La plupart des véhicules actuels intègre un système anti-démarrage. Cet anti-démarrage est généralement constitué d'une étiquette électronique intégrée dans la clef de contact et prévue pour communiquer avec un transpondeur intégré dans la serrure de démarrage du véhicule, ce transpondeur étant relié à des moyens d'immobilisation.

On connaît le document US20010028295, dans lequel est décrite une clef électronique dotée d'un système intelligent pour recevoir des "crédits" d'utilisation depuis un centre de commande. La clef électronique communique de façon bidirectionnelle avec le véhicule. Ce dernier comporte un système électronique pour vérifier, à partir de données contenues dans la clef électronique, si l'utilisateur et ses crédits d'utilisation sont valides, et autoriser le cas échéant le démarrage du véhicule.

Cependant, un tel système implique une clef électronique renfermant l'essentiel de l'intelligence du système, ce qui est problématique puisque, d'une façon générale, les clefs subissent de nombreux chocs, et peuvent donc être facilement détériorés. Par ailleurs, on augmente considérablement le prix de revient d'une clef électronique par rapport aux systèmes conventionnels.

On connaît également le document US20010000957 (WO9851548) décrivant un système de démarrage à distance associé à un système de sécurité antivol. Ce document divulgue notamment un premier transpondeur disposé proche de la serrure de démarrage, un second transpondeur disposé dans la clef de démarrage, un troisième transpondeur, semblable au second transpondeur, disposé dans le véhicule proche du premier transpondeur. Les premier et troisième transpondeurs ne communiquent que lorsqu'un contrôleur de démarrage à distance l'autorise. En fonctionnement normal, les premier et troisième transpondeurs ne communiquent donc pas. Pour inhiber cette communication, c'est à dire le couplage électromagnétique, un quatrième transpondeur, sous forme d'antenne, est disposé autour du troisième transpondeur. Cette antenne (quatrième transpondeur) est activée ou désactivée par une commande de fermeture ou d'ouverture d'un interrupteur disposé dans le circuit de l'antenne, la commande provenant du contrôleur de démarrage à distance.

Le document WO 93/05987 décrit un système pour sécuriser un véhicule. Ce système comporte une étiquette électronique disposée dans une clé mécanique. Lorsqu'on introduit l'étiquette dans le contacteur, elle communique avec un transpondeur en envoyant un code. Si ce code est accepté, il est ensuite envoyé vers plusieurs unités associées chacune à des moyens d'immobilisation du véhicule. Le véhicule ne peut démarrer que si et seulement si toutes les unités valident le code envoyé. A la page 6, lignes 9-13 de ce document WO 93/05987, il est indiqué que la communication entre l'étiquette électronique et le transpondeur s'effectue dès que la clé est introduite dans le lecteur. Ce système de sécurité n'est pas un système anti-démarrage paramétrable et ne permet pas la gestion d'une flotte automobile de façon automatique.

La présente invention a pour but de proposer un nouveau système anti-démarrage pour lequel l'installation est totalement réversible et non dommageable pour le véhicule.

La présente invention a aussi pour but de proposer un nouveau système anti-démarrage pour lequel la sécurité est accrue.

Un autre but de l'invention est de proposer un système anti-démarrage paramétrable en fonction de l'utilisateur.

L'invention a encore pour but un système anti-démarrage permettant de gérer une flotte de façon automatique.

On atteint au moins l'un des objectifs pré-cités avec un système anti-démarrage pour véhicule, comportant :
- un transpondeur anti-démarrage intégré dans le véhicule,
- une étiquette électronique prévue pour communiquer avec le transpondeur, et
des moyens de liaison aptes à établir ou interrompre la communication entre le transpondeur et l'étiquette électronique en réponse à des consignes provenant d'une unité de commande.

Par transpondeur anti-démarrage, on entend un transpondeur associé à des moyens d'immobilisation ou de blocage du démarrage du véhicule.

Avec le système selon l'invention, on peut démonter l'étiquette électronique de la clef pour l'intégrer dans le véhicule. Par ailleurs, en mode radioélectrique, la communication est rendue inactive par le fait que l'étiquette électronique est entourée d'un blindage et/ou par le fait que l'étiquette électronique est intégrée dans le véhicule de manière suffisamment éloignée du transpondeur pour éviter tout couplage électromagnétique.

Ce blindage est sous forme d'enveloppe ou de caisson métallique renfermant l'étiquette électronique, relié à la masse et pourvu d'un connecteur adéquate.

Avec ces précautions, l'étiquette électronique et le transpondeur ne peuvent pas communiquer, ce qui interdit le démarrage du véhicule. Pour autoriser le démarrage, la communication radioélectrique doit être rétablie. Pour ce faire, les moyens de liaison peuvent comprendre :
- une première antenne proche du transpondeur,
- une seconde antenne proche de l'étiquette électronique, et
- une liaison électrique munie d'un interrupteur et reliant les deux antennes, l'interrupteur étant commandé par l'unité de commande.

L'homme du métier comprendra aisément que le terme "proche" implique une distance suffisante pour réaliser un couplage électromagnétique. De préférence, le caisson blindé est de dimension suffisamment grande pour que les lignes de champs de la seconde antenne puissent se refermer.

Avec le système selon l'invention, on ne dégrade pas le véhicule. Le système ne nécessite pas de câblage direct avec des éléments natifs du véhicule. En effet une connexion avec ces éléments pourrait rendre caduque la garantie du constructeur du véhicule. L'invention propose donc un nouveau système anti-démarrage pour lequel l'installation est totalement réversible et non dommageable pour le véhicule. En effet, elle ne nécessite pas de sectionner un câble du véhicule. Elle ne réalise pas d'épissure.

On a en fait réalisé un relais passif. Par relais passif on entend un dispositif de déportation d'antenne ne comportant pas de composant actif tel qu'un amplificateur. L'utilisation d'un relais passif, à la place d'un relais actif, permet une grande indépendance du système par rapport aux protocoles et mode de communication utilisé par l'anti-démarrage du véhicule.

Lorsque les deux antennes sont reliées via l'interrupteur, qui peut être de type électromécanique, il se forme un pont électromagnétique couplant alors l'étiquette électronique au transpondeur. L'interrupteur peut être de tout autre type, tel que par exemple un dispositif à base de transistor.

Le relais passif est activé ou désactivé par une unité de commande pouvant comporter :
- un microcontrôleur pour commander les moyens de liaison en fonction de données saisies par un utilisateur,
- une interface de contact permettant à l'utilisateur de composer un code, et
- une interface sans contact pour la lecture d'un badge de l'utilisateur.

Selon une caractéristique avantageuse de l'invention, l'unité de commande comprend en outre des moyens de communication sans fil aptes à recevoir des paramètres d'autorisation d'accès sur lesquels se base le microcontrôleur pour comparer les données saisies par l'utilisateur.

De préférence, les paramètres d'autorisation d'accès proviennent d'un serveur Internet distant communiquant avec les moyens de communication sans fil au moyen d'un protocole de communication de type Internet sans fil. L'utilisateur peut donc réserver un véhicule donné via ce serveur Internet en spécifiant notamment un code personnel ainsi que d'autres paramètres. Le serveur va donc ensuite envoyer l'ensemble des paramètres d'autorisation d'accès tels que par exemple l'horaire d'utilisation du véhicule, l'identité d'un badge de l'utilisateur et un code personnel, vers l'unité de commande au sein du véhicule donné. La présente invention peut donc parfaitement s'appliquer à la gestion d'une flotte de véhicules, dans lequel on autorise le démarrage d'un véhicule lorsque, pour un utilisateur, :
- une réservation valide a préalablement été transmise dans l'unité de commande depuis le serveur distant via les moyens de communication sans fil, et
- un badge valide est lu par l'interface sans contact, et
- l'utilisateur saisit un code personnel identique à un code préalablement transmis dans l'unité de commande depuis le serveur distant.

Le mode de transmission des paramètres peut être via le réseau téléphonique sans fil, via un réseau satellite, ou via tout autre type de technologie sans fil compatible. Notamment, les paramètres peuvent être saisis par un opérateur (ou utilisateur) dans un appareil dédié portable ou fixe, puis transmis vers les véhicules de façon sans fil.

Selon l'invention, chaque antenne peut être constituée d'une bobine de spires de diamètre sensiblement identique entre les deux antennes. La liaison électrique peut comporter une paire torsadée.

Selon un mode de réalisation préféré de l'invention, la seconde antenne et l'étiquette électronique sont maintenues dans le blindage au moyen d'une résine coulée. L'invention est notamment remarquable par le fait que même si une personne non autorisée démonte le caisson blindé pour le placer proche du transpondeur, le couplage électromagnétique ne se réalise pas. La sécurité antivol est ainsi optimisée.

Par ailleurs, l'unité de commande et l'étiquette électronique peuvent avantageusement être disposées sur une carte électronique installée dans le logement autoradio du véhicule. La carte électronique peut être une plate-forme intelligente identique à celle utilisée dans des agendas électroniques capables de se connecter à Internet.

Suivant un autre aspect de l'invention, il est prévu un procédé anti-démarrage pour véhicule doté d'un transpondeur anti-démarrage, ce transpondeur étant prévu pour communiquer avec une étiquette électronique intégrée dans le véhicule; dans lequel on établit ou interrompt la communication entre le transpondeur et l'étiquette électronique en réponse à des consignes provenant d'une unité de commande. Selon l'invention, on établit ou interrompt la communication en commandant un interrupteur reliant électriquement une première antenne proche du transpondeur à une seconde antenne proche de l'étiquette électronique.

De préférence, l'étiquette électronique provient de la clef de démarrage du véhicule.

D'autres avantages et caractéristiques de l'invention apparaîtront à l'examen de la description détaillée d'un mode de mise en œuvre nullement limitatif, et des dessins annexés, sur lesquels :
- La figure 1 est un schéma simplifié illustrant la disposition d'une étiquette électronique et d'un transpondeur selon l'art antérieur;
- La figure 2 est un schéma simplifié illustrant la disposition d'une étiquette électronique et d'un transpondeur selon l'invention;
- La figure 3 est un schéma synoptique simplifié représentant les principaux éléments du système selon l'invention;
- La figure 4 est un schéma synoptique détaillé des principaux éléments selon l'invention;
- La figure 5 est une vue simplifiée d'une première antenne réalisée proche du transpondeur;
- La figure 6 est une vue simplifiée d'un blindage contenant l'étiquette électronique et une seconde antenne; et
- La figure 7 est un schéma simplifié détaillant les moyens de liaison entre le transpondeur et l'étiquette électronique.

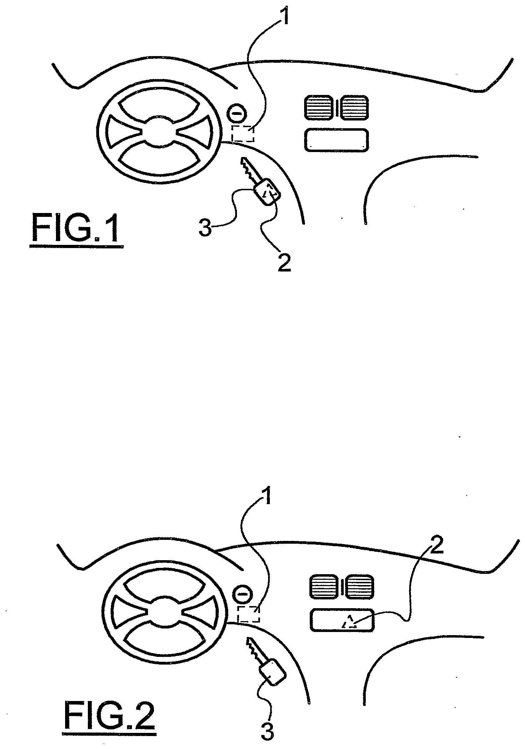

La figure 1 selon l'art antérieur représente une vue intérieure d'un véhicule doté d'un transpondeur 1 disposé dans la serrure de démarrage. Le transpondeur 1 communique avec une étiquette électronique 2 disposée dans une clef de contact lorsque cette étiquette électronique est suffisamment proche du transpondeur. Cela se réalise notamment lorsque la clé est introduite dans la serrure. Lorsque le transpondeur 1 et l'étiquette électronique 2 communiquent et que les informations contenues dans l'étiquette électronique sont valides, le transpondeur commande des moyens d'immobilisation (non représentés) de façon à permettre le démarrage du véhicule.

Sur la figure 2 selon l'invention, on voit l'intérieur d'un véhicule intégrant le système selon l'invention. Le transpondeur 1 est toujours disposé dans la serrure du véhicule. Par contre, la clef électronique 2 n'est plus intégrée dans la clef de démarrage 3 mais dans un boîtier disposé à l'emplacement de l'autoradio du véhicule.

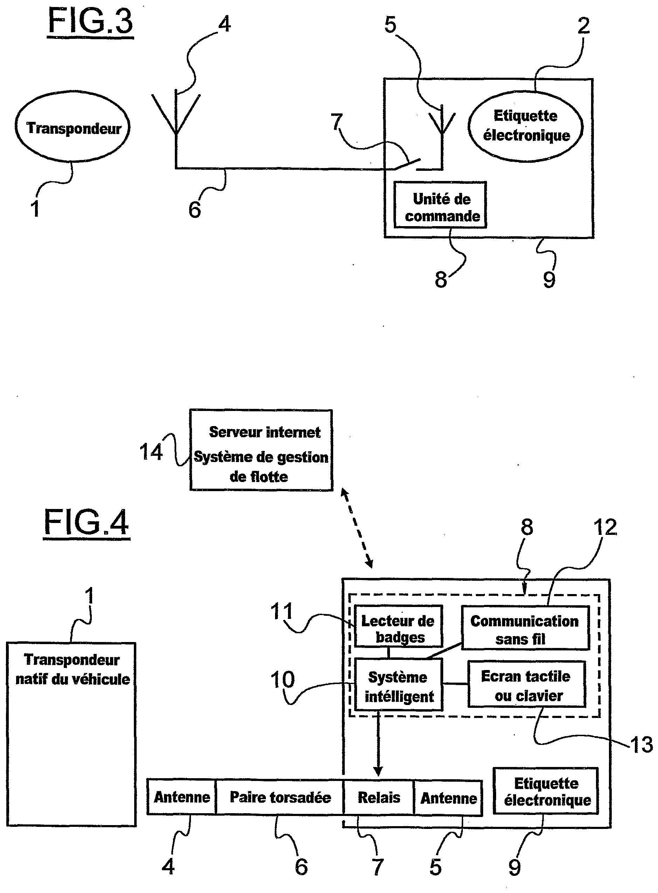

La distance entre le transpondeur 1 et l'étiquette électronique 2 selon l'invention doit être telle que la communication radio électrique est rendue impossible. Cette communication radio-électrique à des fréquences de l'ordre de 150kHz peut être rétablie au moyen de deux antennes connectables conformément au schéma de la figure 3. On voit sur la figure 3 une première antenne 4 disposée proche du transpondeur 1, une seconde antenne 5 disposée proche de l'étiquette électronique 2, et une ligne électrique 6 reliant les 2 antennes 4 et 5. Cette ligne électrique 6 comporte un interrupteur 7 apte à interrompre ou établir la liaison entre les deux antennes 4 et 5. Lorsque l'interrupteur 7 est ouvert, les deux antennes sont suffisamment éloignées pour ne pas que les signaux captés par l'une des deux antennes ne transitent vers l'autre antenne. Lorsque l'interrupteur 7 est fermé, les deux antennes 4 et 5 communiquent.

L'étiquette électronique 2 est suffisamment proche de l'antenne 5, et le transpondeur 1 est suffisamment proche de l'antenne 4 pour qu'une liaison entre les antennes 4 et 5 entraînent une communication radio-électrique entre le transpondeur 1 et l'étiquette électronique 2.

L'interrupteur 2 est commandé par une unité de commande 8. L'ensemble interrupteur 7, antenne 5, étiquette électronique 2 et unité de commande 8, est disposé sur une carte électronique 9 intégrée dans le logement autoradio du véhicule.

Sur la figure 4, on voit un peu plus en détail les éléments constitutifs de l'invention. On retrouve le transpondeur 1 natif du véhicule et assurant la fonction anti-démarrage. La ligne électrique 6 est une paire torsadée de longueur comprise entre 10 cm et 1 mètre entre les deux antennes. On compte environ 3 torsades par cm. La paire torsadée se termine par deux cosses FASTON® de type automobile qui se connectent sur la carte électronique 9.

L'interrupteur 7 est commandé par un système intelligent tel qu'un micro-contrôleur 10 disposé dans l'unité de commande 8. Ce micro contrôleur 10 est relié au sein de l'unité de commande 8 à un lecteur de badges 11, un écran tactile ou clavier 13 et une interface de communication sans fil 12 capable de communiquer avec un serveur distant 14.

Dans une application de gestion d'une flotte de véhicules, le serveur distant 14 peut être un serveur Internet intégrant un système de gestion de flotte et capable de communiquer de façon sans fil avec l'interface 12. Le fonctionnement de ce serveur peut être le suivant : un utilisateur réserve un véhicule via le serveur Internet en spécifiant notamment un code personnel. Ce code personnel ainsi que d'autres paramètres d'autorisation d'accès tels que l'horaire et l'identification d'un badge de l'utilisateur sont transmis au moyen d'une technologie Internet sans fil telle que par exemple GPRS, 802.11, UMTS, Bluetooth, vers l'interface de communication sans fil 12 disposée sous la carte électronique 9. La transmission est cryptée au niveau de la couche d'application (SSL, SSH, MD5). Lorsque l'utilisateur introduit son badge dans le lecteur à badge 11 et saisi un code personnel au moyen de l'interface 13, le microcontrôleur 10 est capable de comparer les données saisies avec les paramètres d'autorisation d'accès de façon à permettre ou non un contact de l'interrupteur 7, qui reste ouvert dans sa position de repos. La fermeture de l'interrupteur 7 signifie autorisation de démarrage. Le démarrage et autorisé si et seulement si :
- une réservation valide a été transmise par le serveur 14 vers l'unité de commande,
- un badge valide a été lu par le lecteur du badge 11, et
- l'utilisateur saisit un code personnel identique à celui transmis par le serveur.

La carte électronique 9 peut être une plate forme électronique telle que celle utilisée dans des agendas électroniques tels que par exemple POCKETPC® (IPAQ COMPAQ®, TOSHIBA®).

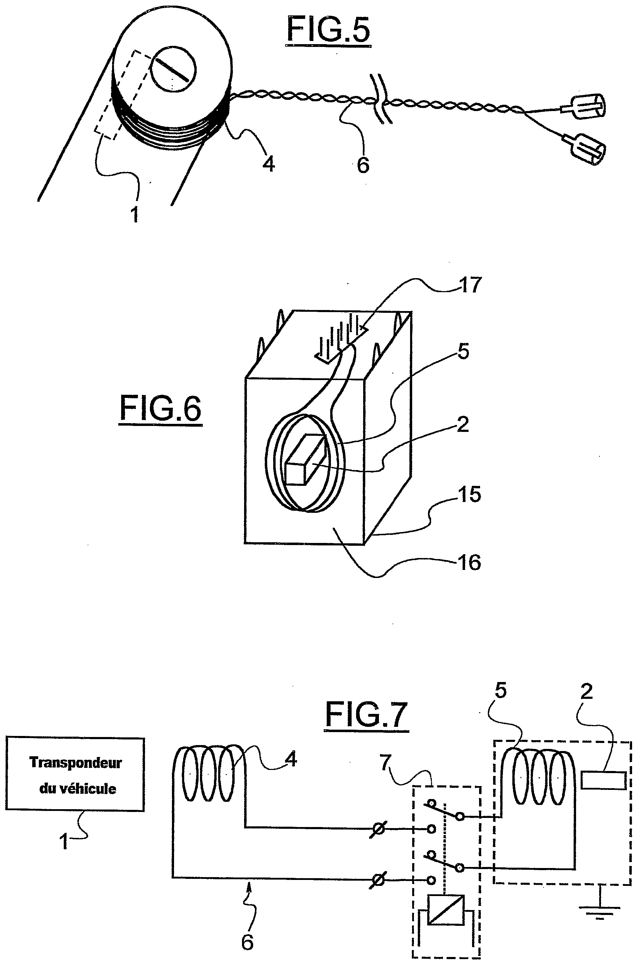

Sur la figure 5, on distingue de manière schématique l'antenne 4 réalisée sous forme de dix spires de câble rigide mono-brin dont l'âme étamée présente un diamètre de trente-centièmes de millimètre. Cette antenne est disposée autour de la serrure de contact du véhicule au plus près de l'antenne du transpondeur 1.

Les spires de l'antenne 4 sont cachées par l'habillage intérieur du véhicule et sont directement connectées à la paire torsadée 6.

Selon l'invention, l'étiquette électronique 2 est démontée de la clef de contact du véhicule, et placée dans une enveloppe blindée 15 telle que représentée sur la figure 6. Cette enveloppe blindée est à fixer sur la carte électronique 9 installée dans le logement autoradio.

Des connecteurs à souder 17 permettent la connexion entre l'antenne 5 disposée dans l'enveloppe blindée 15 et l'interrupteur commandé 7. Le fait que l'étiquette soit éloignée du transpondeur et entourée d'un blindage, empêche la communication et interdit le démarrage.

L'antenne 5 est réalisée sous forme d'une bobine de dix spires par exemple, avec un diamètre sensiblement égal à celle de la bobine 4 disposée autour de la serrure de contact. L'étiquette électronique 2, contenue à l'origine dans la clef de contact du véhicule, est placée au centre de la bobine 5 et orientée de façon à maximiser le couplage électromagnétique avec une antenne interne (non représentée) de l'étiquette électronique 2. Cette orientation peut être déduite de l'orientation habituelle de l'étiquette électronique dans la clef de contact par rapport à l'antenne du transpondeur intégrée dans la serrure de contact. Pour bien maintenir la bobine 5 et l'étiquette électronique 2, de la résine coulée est disposée dans l'enveloppe blindée 15. Les deux fils de la bobine 5 aboutissent sur le connecteur 17.

Pour autoriser le démarrage, c'est à dire établir la communication radio-électrique entre l'étiquette électronique et le transpondeur 1, on doit réaliser un contact électrique entre les deux antennes 4 et 5 via la paire torsadée 6 et l'interrupteur commandé 7. Ce contact électrique permet de réaliser un pont électromagnétique couplant l'étiquette électronique 2 et le transpondeur 1. L'interrupteur 7 est de type électromécanique comportant deux contacts, un contact par conducteur électrique de la paire torsadée, conformément à la figure 7. Les précautions habituelles connues de l'homme du métier doivent être apportées à cette réalisation pour éviter l'apparition de couplages parasites qui contourneraient l'interrupteur et rendrait inopérante la coupure.

Lorsque l'interrupteur est fermé, le démarrage est possible. Lorsque l'interrupteur est ouvert le démarrage est interdit (position de repos).

La présente invention consiste donc en un répéteur passif permettant de déporter une étiquette électronique habituellement reconnue quand elle est à proximité d'un transpondeur. L'étiquette électronique est intégrée dans une enveloppe blindée. Elle est mise en communication avec le transpondeur via une antenne à proximité du transpondeur, un câble électrique et une deuxième antenne proche de l'étiquette. Le câble comporte un interrupteur électromécanique permettant à une unité de commande d'interrompre ou d'établir la liaison radio électrique.

Bien sûr, l'invention n'est pas limitée aux exemples qui viennent d'être décrits et de nombreux aménagements peuvent être apportés à ces exemples sans sortir du cadre de l'invention. Le système peut notamment être réversible, dans le sens que le blindage et la résine coulée peuvent être disposés autour de la première antenne 4 et que la carte électronique supportant l'unité de commande et l'interrupteur, porte également le blindage.

## Revendications

1. Système anti-démarrage pour véhicule, comportant :
- un transpondeur (1) anti-démarrage intégré dans le véhicule,
- une étiquette électronique (2) prévue pour communiquer avec le transpondeur (1), et
- des moyens de liaison (4-7) aptes à établir ou interrompre la communication entre le transpondeur et l'étiquette électronique en réponse à des consignes provenant d'une unité de commande (8),
**caractérisé en ce que** les moyens de liaison comprennent :
- une première antenne (4) proche du transpondeur (1),
- une seconde antenne (5) proche de l'étiquette électronique (2), et
- une liaison électrique (6) munie d'un interrupteur (7) et reliant les deux antennes (4, 5), l'interrupteur (7) étant commandé par l'unité de commande (8).

2. Système selon la revendication 1, **caractérisé en ce qu'**en mode radioélectrique, la communication est rendue inactive par le fait que l'étiquette électronique (2) est intégrée dans le véhicule de manière suffisamment éloignée du transpondeur (1) pour éviter tout couplage électromagnétique.

3. système selon la revendication 1 ou 2, **caractérisé en ce qu'**en mode radioélectrique, la communication est rendue inactive par le fait que l'étiquette électronique (2) est entourée d'un blindage (15).

4. Système selon l'une quelconque des revendications précédentes, **caractérisé en ce que** l'interrupteur (7) est de type électromécanique.

5. Système selon l'une quelconque des revendications précédentes, **caractérisé en ce que** la liaison électrique (6) comporte une paire torsadée.

6. Système selon l'une quelconque des revendications précédentes, **caractérisé en ce que** chaque antenne (4, 5) est constituée d'une bobine de spires de diamètre sensiblement identique entre les deux antennes.

7. Système selon l'une quelconque des revendications précédentes, **caractérisé en ce que** la seconde antenne (5) et l'étiquette électronique (2) sont maintenues dans le blindage au moyen d'une résine coulée.

8. Système selon l'une quelconque des revendications précédentes, **caractérisé en ce que** l'unité de commande (8) comporte :
- un microcontrôleur (10) pour commander les moyens de liaison en fonction de données saisies par un utilisateur,
- une interface de contact (13) permettant à l'utilisateur de composer un code, et
- une interface sans contact (11) pour la lecture d'un badge de l'utilisateur.

9. Système selon la revendication 8, **caractérisé en ce que** l'unité de commande (8) comprend en outre des moyens de communication sans fil (12) aptes à recevoir des paramètres d'autorisation d'accès sur lesquels se base le microcontrôleur pour comparer les données saisies par l'utilisateur.

10. Système selon la revendication 9, **caractérisé en ce que** les paramètres d'autorisation d'accès proviennent d'un serveur Internet distant (14) communiquant avec les moyens de communication sans fil (12) au moyen d'un protocole de communication de type Internet sans fil.

11. Système selon l'une quelconque des revendications précédentes, **caractérisé en ce que** l'unité de commande (8) et l'étiquette électronique (2) sont disposées sur une carte électronique (9) installée dans le logement autoradio du véhicule.

12. Application du système selon les revendications 8 et 9 pour la gestion d'une flotte de véhicules, dans lequel on autorise le démarrage d'un véhicule lorsque, pour un utilisateur :
- une réservation valide a préalablement été transmise dans l'unité de commande (8) depuis un serveur distant (14) via les moyens de communication sans fil (12), et
- un badge valide est lu par l'interface sans contact (11), et
- l'utilisateur saisit un code personnel identique à un code préalablement transmis dans l'unité de commande (8) depuis le serveur distant (14).

13. Procédé anti-démarrage pour véhicule doté d'un transpondeur anti-démarrage (1), ce transpondeur étant prévu pour communiquer avec une étiquette électronique (2) intégrée dans le véhicule; dans lequel on établit ou interrompt la communication entre le transpondeur et l'étiquette électronique en réponse à des consignes provenant d'une unité de commande (8), **caractérisé en ce qu'**on établit ou interrompt la communication en commandant un interrupteur (7) reliant électriquement une première antenne (4) proche du transpondeur (1) à une seconde antenne (5) proche de l'étiquette électronique (2).

14. Procédé selon la revendication 13, **caractérisé en ce que** l'étiquette électronique (2) provient de la clef (3) de démarrage du véhicule.

15. Procédé selon la revendication 13 ou 14, pour la gestion d'une flotte de véhicules, dans lequel on autorise le démarrage d'un véhicule lorsque, pour un utilisateur :
- une réservation valide a préalablement été transmise dans l'unité de commande (8) depuis un serveur distant (14) via les moyens de communication sans fil (12), et
- un badge valide est lu par l'interface sans contact (11), et
- l'utilisateur saisit un code personnel identique à un code préalablement transmis dans l'unité de commande (8) depuis le serveur distant (14).

## Patentansprüche

1. Wegfahrsperren-System für ein Fahrzeug, das aufweist:
- einen in dem Fahrzeug integrierten Wegfahrsperren-Transponder (1),
- ein für das Kommunizieren mit dem Transponder (1) vorgesehenes elektronisches Etikett (2), und
- für das Herstellen oder Unterbrechen der Kommunikation zwischen dem Transponder und dem elektronischen Etikett als Antwort auf von einer Steuereinheit (8) stammenden Anweisungen geeignete Verbindungsmittel (4-7),
**dadurch gekennzeichnet, dass** die Verbindungsmittel aufweisen:
- eine erste, dicht an dem Transponder (1) angeordnete Antenne (4)
- eine zweite, dicht an dem elektronischen Etikett (2) angeordnete Antenne (5), und
- eine mit einem Schalter (7) ausgestattete elektrische Verbindung (6), die die beiden Antennen (4, 5) verbindet, wobei der Schalter (7) von der Steuereinheit (8) gesteuert wird.

2. System nach Anspruch 1, **dadurch gekennzeichnet, dass** im radioelektrischen Modus die Kommunikation deaktiviert ist, indem das elektronische Etikett (2) in dem Fahrzeug hinreichend entfernt von dem Transponder (1) angeordnet ist, um sämtliche elektromagnetische Kopplung zu vermeiden.

3. System nach Anspruch 1 oder 2, **dadurch gekennzeichnet, dass** im radioelektrischen Modus die Kommunikation deaktiviert ist, indem das elektronische Etikett (2) von einer Abschirmung (15) umgeben ist.

4. System nach einem der voranstehenden Ansprüche, **dadurch gekennzeichnet, dass** der Schalter (7) als elektromechanischer Schalter ausgebildet ist.

5. System nach einem der voranstehenden Ansprüche, **dadurch gekennzeichnet, dass** die elektrische Verbindung (6) ein verdrilltes Adernpaar aufweist.

6. System nach einem der voranstehenden Ansprüche, **dadurch gekennzeichnet, dass** jede Antenne (4, 5) eine Spule aufweist, wobei der Windungsdurchmesser der beiden Spulen im Wesentlichen gleich ist.

7. System nach einem der voranstehenden Ansprüche, **dadurch gekennzeichnet, dass** die zweite Antenne (5) und das elektronische Etikett (2) mittels eines Gießharzes in der Abschirmung gehalten sind.

8. System nach einem der voranstehenden Ansprüche, **dadurch gekennzeichnet, dass** die Steuereinheit (8) umfasst:
- ein Mikrocontroller (10) für das Steuern der Verbindungsmittel abhängig von den von einem Nutzer eingegebenen Daten,
- eine Kontaktschnittstelle (13), die dem Nutzer die Eingabe eines Codes ermöglicht, und
- eine kontaktlose Schnittstelle (11) für das Auslesen eines Ausweises des Nutzers.

9. System nach Anspruch 8, **dadurch gekennzeichnet, dass** die Steuereinheit (8) weiterhin drahtlose Kommunikationsmittel (12) aufweist, die geeignet sind, Zugriffsautorisierungsparameter zu empfangen, auf die sich der Mikrocontroller stützt, um die von dem Nutzer eingegebenen Daten zu vergleichen.

10. System nach Anspruch 9, **dadurch gekennzeichnet, dass** die Zugriffsautorisierungsparameter von einem Internet-Fernserver stammen, der mit den drahtlosen Kommunikationsmitteln (12) mittels eines drahtlosen Netzkommunikationsprotokolls kommuniziert.

11. System nach einem der voranstehenden Ansprüche, **dadurch gekennzeichnet, dass** die Steuereinheit (8) und das elektronische Etikett (2) auf einer elektronischen Karte (9) angeordnet sind, die in der Aufnahme des Autoradios des Fahrzeugs eingerichtet ist.

12. Anwendung des Systems nach den Ansprüchen 8 und 9 für die Kontrolle einer Fahrzeugflotte, indem der Start eines Fahrzeugs erlaubt wird, wenn, für einen Nutzer:
- eine gültige Reservierung im Vorfeld an die Steuereinheit (8) von einem Fernserver (14) mittels der drahtlosen Kommunikationsmittel (12) übertragen wurde, und
- ein gültiger Ausweis von der kontaktlosen Schnittstelle (11) ausgelesen wird, und
- der Nutzer einen persönlichen Code eingibt, der einem im Vorfeld von dem Fernserver (14) an die Steuereinheit (8) übertragenen Code entspricht.

13. Wegfahrsperren-Verfahren für ein Fahrzeug ausgestattet mit einem Wegfahrsperren-Transponder (1), wobei der Transponder für die Kommunikation mit einem im Fahrzeug integrierten elektronischen Etikett (2) vorgesehen ist, in dem die Kommunikation zwischen dem Transponder und dem elektronischen Etikett als Antwort auf von einer Steuereinheit (8) stammenden Anweisungen hergestellt oder unterbrochen wird,
**dadurch gekennzeichnet, dass** die Kommunikation durch das Steuern eines Schalters (7) hergestellt oder unterbrochen wird, der eine erste, dicht an dem Transponder (1) angeordnete Antenne (4) elektrisch mit einer zweiten, dicht an dem elektronischen Etikett (2) angeordneten Antenne (5) verbindet.

14. Verfahren nach Anspruch 13, **dadurch gekennzeichnet, dass** das elektronische Etikett (2) von dem Schlüssel (3) für den Start des Fahrzeugs stammt.

15. Verfahren nach Anspruch 13 oder 14, für die Kontrolle einer Fahrzeugflotte, in dem der Start eines Fahrzeugs autorisiert wird, wenn für einen Nutzer:
- eine gültige Reservierung im Vorfeld an die Steuereinheit (8) von einem Fernserver (14) mittels der drahtlosen Kommunikationsmittel (12) übertragen wurde, und
- ein gültiger Ausweis von der kontaktlosen Schnittstelle (11) ausgelesen wird, und
- der Nutzer einen persönlichen Code eingibt, der einem im Vorfeld von dem Fernserver (14) an die Steuereinheit (8) übertragenen Code entspricht.

## Claims

1. Vehicle anti theft system, comprising:
- an immobilizing transponder (1) integrated in the vehicle,
- an electronic label (2) intended to communicate with the transponder (1), and
- connection means (4-7) which are able to establish or interrupt the communication between the transponder and the electronic label in response to orders coming from a control unit (8),
**characterized in that** the connection means include:
- a first antenna (4) close to the transponder (1),
- a second antenna (5) close to the electronic label (2), and
- an electrical connection (6) equipped with a switch (7) and connecting the two antennae (4, 5), the switch (7) being controlled by the control unit (8).

2. System according to claim 1, **characterized in that** in wireless mode, the communication is rendered inactive by the electronic label (2) being integrated in the vehicle far enough away from the transponder (1) to prevent any electromagnetic coupling.

3. System according to claim 1 or 2, **characterized in that** in wireless mode, the communication is rendered inactive by surrounding the electronic label (2) with a radio-shielding (15).

4. System according to any one of the preceding claims, **characterized in that** the switch (7) is of the electromechanical type.

5. System according to any one of the preceding claims, **characterized in that** the electrical connection (6) comprises a twisted pair.

6. System according to any one of the preceding claims, **characterized in that** each antenna (4,5) is constituted by a coil of turns with a diameter which is substantially identical between the two antennae.

7. System according to any one of the preceding claims, **characterized in that** the second antenna (5) and the electronic label (2) are held in the radio-shielding by means of a cast resin.

8. System according to any one of the preceding claims, **characterized in that** the control unit (8) comprises:
- a microcontroller (10) for controlling the connection means as a function of data entered by a user,
- a contact interface (13) allowing the user to enter a code, and
- an interface without contact (11) for reading a user's badge.

9. System according to claim 8, **characterized in that** the control unit (8) also comprises wireless communication means (12) which are able to receive access authorization parameters which the microcontroller uses as a basis to compare the data entered by the user.

10. System according to claim 9, **characterized in that** the access authorization parameters come from a remote Internet server (14) communicating with the
wireless communication means (12) by means of a communications protocol of the wireless Internet type.

11. System according to any one of the preceding claims, **characterized in that** the control unit (8) and the electronic label (2) are arranged on an electronic card (9) installed in the housing of the vehicle radio.

12. Application of the system according to claims 8 and 9 for the management of a fleet of vehicles, in which the starting of a vehicle is authorized when, for a user,:
- a valid reservation has been sent to the control unit (8) previously from a remote server (14) via the wireless communication means (12), and
- a valid badge is read by the interface without contact (11), and
- the user enters a personal identification number identical to a number previously sent to the control unit (8) from the remote server (14).

13. Method for immobilizing a vehicle having an immobilizing transponder (1), this transponder being intended to communicate with an electronic label (2) integrated in the vehicle; in which the communication between the transponder and the electronic label is established or interrupted in response to orders coming from a control unit (8), **characterized in that** the communication is established or interrupted by controlling a switch (7) which electrically connects a first antenna (4) close to the transponder (1) to a second antenna (5) close to the electronic label (2).

14. Method according to claim 13, **characterized in that** the electronic label (2) comes from the ignition key (3) of the vehicle.

15. Method according to claim 13 or 14, for the management of a fleet of vehicles, in which the starting of a vehicle is authorized when, for a user:
- a valid reservation has been sent to the control unit (8) previously from a remote server (14) via the wireless communication means (12), and
- a valid badge is read by the interface without contact (11), and
- the user enters a personal identification number identical to a number previously sent to the control unit (8) from the remote server (14).
